# EUROPEAN PATENT SPECIFICATION

(11) **EP 3 931 075 B1**
(45) Date of publication and mention of the grant of the patent: **17.04.2024**
(21) Application number: 20710314.4
(22) Date of filing: 28.02.2020
(51) Int. Cl.: B63B 35/04, H02G 1/10

(54) **VESSEL AND METHOD FOR OFFSHORE CABLE LAYING**
SCHIFF UND VERFAHREN ZUR VERLEGUNG VON OFFSHORE-KABELN
NAVIRE ET PROCÉDÉ DE POSE DE CÂBLE EN MER

(30) Priority: 01.03.2019 NL 2022670; 14.11.2019 NL 2024241
(43) Date of publication of application: 05.01.2022
(73) Proprietor: Itrec B.V., 3115 HH Schiedam (NL)
(72) Inventor: NOUWENS, Ronny Lambertus Waltherus, 3115 HH SCHIEDAM (NL); VAN DEN DONKER, Tim, 3115 HH SCHIEDAM (NL); VEHMEIJER, Terence Willem August, 3115 HH SCHIEDAM (NL)
(74) Representative: EP&C
(86) International application number: PCT/NL2020/050135
(87) International publication number: WO 2020/180178

(56) References cited:
- WO-A1-2018/217085
- GB-A- 2 363 362
- NL-A- 1 041 049

## Description

The invention relates to a vessel and method for offshore cable laying in which the cable is paid out from a vessel and laid on or in a seabed using the vessel.

The cable to be laid may be a power, electrical or data communication cable, but may also be a flexible article having a similar behaviour as a cable, e.g. umbilicals or flexible pipelines.

The present invention is in particular applicable to the situation in which a cable needs to be laid between two offshore locations in which a first end of the cable is lowered at a first location and subsequently an opposite second end of the cable is lowered at a second location after which a cable portion in between the first and second end is lowered to the seabed using a so-called overboarding quadrant.

A prior art example of a device and method for offshore cable laying can be found in international patent publication WO2018/117833A1 and in NL1041049A.

A drawback of cables and other similar flexible articles is that they can easily be damaged, e.g. when the cable is bend beyond the minimum radius of curvature, twisted too much or handled too roughly, which may for instance be caused by wave-induced motion of the vessel.

It is therefore an object of the invention to provide a device and method for offshore cable laying in which the risk of damaging the cable during the method is reduced.

According to the invention, there is provided a vessel for lowering a flexible article, e.g. a cable, into the sea, said vessel comprising:
- a first guide for guiding the flexible article into the sea;
- a second guide for guiding the flexible article into the sea;
- an overboarding quadrant; and
- an article support system for supporting the article,

wherein the article support system includes a first support section extending between the first guide and the overboarding quadrant, and a second support section extending between the second guide and the overboarding quadrant, said overboarding quadrant being configured to support and guide the article between the first support section and the second support section,
wherein the overboarding quadrant is moveable along the first and second support sections between the first and second guide ends of the first and second support section and the opposite ends of the first and second support sections,
wherein the vessel further comprises a quadrant handling system at the first and second guide side of the vessel, which quadrant handling system is configured to move the overboarding quadrant between a substantially horizontal orientation at the first and second support sections and a substantially vertical orientation to lower the overboarding quadrant into the sea,
wherein the vessel further comprises a heave compensation system configured to operate on the overboarding quadrant to compensate for wave-induced heave motion of the vessel in any orientation of the quadrant handling system between the substantially horizontal orientation and the substantially vertical orientation.

Preferably, the heave compensation system is further configured to operate on the overboarding quadrant to compensate for wave-induced heave motion of the vessel in any position of the overboarding quadrant along the first and second support sections.

In an embodiment, the heave compensation system is further configured to operate on the overboarding quadrant to compensate for wave-induced heave motion of the vessel during lowering of the overboarding quadrant towards the sea bottom.

The invention is based on the insight that undesired vessel motions can be a significant cause for damage to the flexible article. The undesired vessel motions may cause the flexible article to bend beyond the minimal bending curvature as prescribed by the producer of the flexible article thereby resulting for instance in a kink in the cable. One of the undesired vessel motions is wave-induced heave of the vessel.

In the prior art, heave compensation for the overboarding quadrant has been applied before, but only once the overboarding quadrant is released from the quadrant handling system to be lowered into the sea. An example of heave compensation during lowering of a cable to be laid is disclosed by GB2363362.

An advantage of the invention is that heave compensation should also be applied when the overboarding quadrant is moved along the first and second support sections towards the first and second guide, and when the overboarding quadrant is moved from the substantially horizontal orientation and the substantially vertical orientation by the quadrant handling system. Due to the heave compensation, undesired motions of the flexible article are prevented or at least reduced thereby reducing the risk of damage of the flexible article by the undesired motions.

In an embodiment, the vessel includes a pulling cable connected to the overboarding quadrant and a winch to haul in and pay out the pulling cable. The winch and pulling cable can be used to position the overboarding quadrant along the first and second support sections. When a flexible article is supported by the first and second support sections and around the overboarding quadrant, a tension in the flexible article will then urge the overboarding quadrant towards the first and second guide ends of the first and second support section, and thus towards the quadrant handling system. Paying out the pulling cable by the winch will then move the overboarding quadrant towards the first and second guide ends of the first and second support section, and thus towards the quadrant handling system. Hauling in the pulling cable by the winch will then move the overboarding quadrant in the opposite direction, i.e. away from the first and second guide ends of the first and second support section, and thus away from the quadrant handling system.

It is possible that the winch and pulling cable are part of the heave compensation and the winch is actively controlled to apply heave compensation on top of the normal position control of the overboarding quadrant. It is also possible that the winch is moveably arranged on the vessel, e.g. on a moveable platform, wherein the winch is used for normal position control of the overboarding quadrant and the heave compensation is configured to apply active and/or passive heave compensation to the moveable platform or any other construction responsible for the winch being moveable relative to the vessel.

In an embodiment, the quadrant handling system includes a frame that is moveable between a substantially horizontal orientation such that the overboarding quadrant can be moved over the frame, and a substantially vertical orientation to lower the overboarding quadrant into the sea, wherein the frame at or near a free end of the frame includes a sheave to guide the pulling cable between the overboarding quadrant and the winch when the overboarding quadrant is supported by the frame. During movement of the frame between the horizontal and vertical orientation, the sheave compensation system is able to apply heave compensation to the overboarding quadrant, for instance by:
- applying active heave compensation to the pulling cable using the winch;
- applying active and/or passive heave compensation to the support construction of the winch; and/or
- applying active heave compensation to the frame supporting the overboarding quadrant.

In an embodiment, the quadrant handling system includes a frame that is moveable between a substantially horizontal orientation such that the overboarding quadrant can be moved over the frame, and a substantially vertical orientation to lower the overboarding quadrant into the sea, wherein the frame includes a lowering winch and lowering cable to be connected to the overboarding quadrant, such that heave compensation can be applied to the overboarding quadrant during the movement between horizontal and vertical orientation via the lowering winch and lowering cable. This embodiment may be particularly advantageous when heave compensation in any position of the overboarding quadrant along the first and second support sections is not desired or required.

In an embodiment, the quadrant handling system, e.g. the frame, is arranged in between the first and second guide, preferably at the stern of the vessel.

In an embodiment, the frame includes a rotation axis at or near the stern of the vessel in between the first and second guide and extends parallel to and in between the first and second support sections.

The above described winch and pulling cable may be a first winch and a first pulling cable, wherein the vessel comprises a second winch and a second pulling cable. The second pulling cable may be connected to the overboarding quadrant to apply pulling forces to the overboarding quadrant in an opposite direction than the first pulling cable, thereby allowing to move the overboarding quadrant in both directions without being dependent on the tension in the flexible article.

In an embodiment, the vessel comprises an orientation determination device to determine the orientation of the quadrant handling system, e.g. the frame, and/or to determine the orientation of the overboarding quadrant, wherein the winch or the first and second winches, are to be controlled based on an output of the orientation determination device when the overboarding quadrant is supported by the quadrant handling system.

When the quadrant handling system moves the overboarding quadrant from the horizontal orientation to the vertical orientation, the length of pulling cable between the overboarding quadrant and the winch required to keep the overboarding quadrant in the same position relative to the quadrant handling system, e.g. along the frame, will increase. By determining the orientation of the quadrant handling system, the frame or the overboarding quadrant itself, the winch can be controlled to compensate for this increase by paying out the pulling cable. In addition thereto, heave compensation may be applied to the overboarding quadrant.

In an embodiment, the quadrant handling system and/or the overboarding quadrant include corresponding coupling means to temporarily couple the overboarding quadrant to the quadrant handling system such that the overboarding quadrant is moveable in a direction along the quadrant handling system for heave compensation purposes and for lowering he overboarding quadrant into the sea, and such that movement in at least one other direction is prevented. This may have for instance the advantage that the motion between the horizontal and vertical orientation is controlled in directions in which undesired motions are expected to avoid undesired collisions between quadrant handling system and overboarding quadrant and minimizes damage.

The invention also relates to a method for lowering a flexible article into the sea using a vessel comprising:
- a first guide for guiding the flexible article into the sea;
- a second guide for guiding the flexible article into the sea;
- an overboarding quadrant;
- an article support system for supporting the article; and
- a quadrant handling system at the first and second guide side of the vessel,

wherein the article support system includes a first support section extending between the first guide and the overboarding quadrant, and a second support section extending between the second guide and the overboarding quadrant, said overboarding quadrant being configured to support and guide the article between the first support section and the second support section,
wherein the overboarding quadrant is moveable along the first and second support sections between the first and second guide ends of the first and second support section and the opposite ends of the first and second support sections,
and wherein the method comprises the following steps:
   a) supporting a flexible article extending between the first guide and the second guide via the overboarding quadrant by the first support section, the second support section, and the overboarding quadrant;
   b) moving the overboarding quadrant along the first and second upper sections towards the first and second guide;
   c) moving the overboarding quadrant from a substantially horizontal orientation at the first and second support sections towards a substantially vertical orientation using the quadrant handling system; and
   d) lowering the overboarding quadrant into the sea,
wherein heave compensation of the overboarding quadrant is applied at least partially during steps c) and d), and preferably also during step b).

According to a second aspect of the invention, there is provided an overboarding quadrant for lowering a flexible article into the sea, wherein the overboarding quadrant includes a support for supporting and guiding the flexible article along a guide path, wherein the support includes a plurality of support segments that are moveable relative to each other between a lowering configuration in which the guide path is arcuate and a releasing configuration in which the guide path is substantially straight.

In prior art lowering and release methods, the overboarding quadrant is lowered to above the sea bottom, and subsequently rotated to release the flexible article from the overboarding quadrant to drop the flexible article onto the sea bottom. However, this means that during the drop, the flexible article is free to move and due to the considerable overlength can bend in undesired ways that may result in damage to the flexible article.

An advantage of the overboarding quadrant according to the second aspect of the invention is that by changing the arcuate guide path to a substantially straight guide path the overlength in the flexible article may be reduced and/or the flexible article may be released from a smaller distance from the sea bottom to provide a more controlled drop of the flexible article and thus reduces the risk of damage to the flexible article.

In an embodiment, the support segments are only rotatable relative to each other between a first angular orientation corresponding to the lowering configuration and a second angular orientation corresponding to the releasing configuration. In this way, the moveability, i.e. the flexibility of the overboarding quadrant is limited to the lowering and releasing configurations and any intermediate configuration, but other configurations are not possible.

In an embodiment, the overboarding quadrant is configured such that the guide path has a single radius of curvature over its entire length in the lowering configuration and each intermediate configuration between the lowering configuration and the releasing configuration. Hence, when moving the support segments between the lowering configuration and the releasing configuration, the radius of curvature of the guide path gradually increases from the value corresponding to the lowering configuration to an infinite value corresponding to the releasing configuration.

Preferably, the support segments are linked together such that when one support segment is moved relative to an adjacent support segment, the radius of curvature along the entire guide path is changed and thus all support segments move accordingly. This allows to actuate at one or more locations and change the entire shape of the support.

In an embodiment, the overboarding quadrant includes an actuating system to move the support segments between the lowering and releasing configuration. However, external actuation, e.g. using operating wires pulling on one or more support segments, and/or passive actuation, e.g. by allowing one or both ends of the actuating system to engage with the sea bottom during lowering, are also envisaged.

In an embodiment, the overboarding quadrant includes a locking mechanism to lock the position of the support segments, preferably in the lowering configuration and/or releasing configuration, and possibly also in one or more or any intermediate position.

In an embodiment, the guide path is semi-circular in the lowering configuration with both ends of the support extending in the same direction.

The invention will now be described in a non-limiting way by reference to the accompanying drawings in which like parts are indicated using like reference symbols, and in which:
- Fig. 1: depicts a cross-sectional view of a vessel according to an embodiment of the invention;
- Fig. 2: depicts a plan view of the vessel of Fig. 1;
- Fig. 3: depicts a perspective rear view of a stern of a vessel according to an embodiment different but similar to the embodiment of Figs 1 and 2 while lowering an overboarding quadrant into the sea;
- Fig. 4: depicts a perspective top view of a vessel according to another embodiment of the invention;
- Fig. 5: depicts a perspective side view of the vessel of Fig. 4;
- Fig. 6: depicts a top view of the vessel of Fig. 4 with a frame carrying cable laying equipment in a central position of a substantially horizontal plane;
- Fig. 7: depicts a top view of the vessel of Fig. 4 with the frame in one corner of the substantially horizontal plane;
- Fig. 8: depicts a top view of the vessel of Fig. 4 with the frame in an opposite corner of the substantially horizontal plane; and
- Fig. 9: depicts an initial cable curve, an uncompensated cable curve after vessel motion and a compensated cable curve after vessel motion between vessel and a bottom of a sea

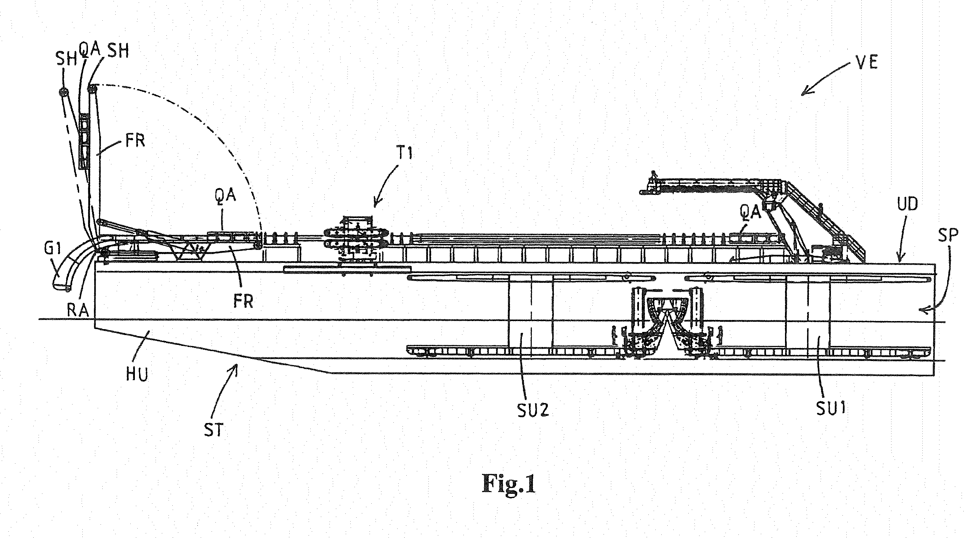

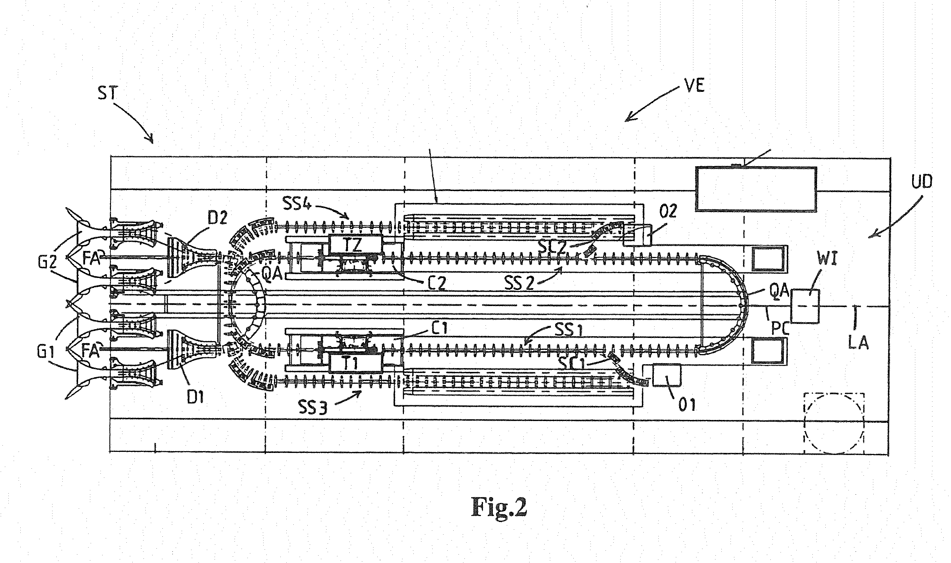

Figs. 1 and 2 depict a cross-sectional view and plan view, respectively, of a vessel VE according to an embodiment of the invention. For conciseness and clarity reasons, the exemplary vessel VE of Fig. 1 is used to show and describe all aspects of the invention. However, although this provides a clear example of how various aspects of the invention can be combined in the design of a single vessel, it is explicitly noted here that each aspect of the invention can be applied to a vessel and used in a method in isolation as well and thus that combinations of various aspect of the invention are not necessary per se.

The vessel VE comprises a hull HU, here a monohull, providing buoyancy to the vessel VE and supporting and accommodating all equipment. Figs. 1 and 2 only depict a stern ST side of the vessel VE. The bow, usually also holding a superstructure to accommodate personnel, etc., is not depicted here and also not relevant for the present invention or aspects thereof.

The hull HU defines an upper deck UD with a space SP below the upper deck UD in this example accommodating two storage units SU1, SU2 in the form of reels which are rotatable about a substantially vertical axis. The storage units SU1, SU2 are configured to store a certain length of flexible article, e.g. a cable. In this embodiment, the storage units SU1, SU2 are arranged substantially permanently inside the space SP. A cable may be reeled onto a storage unit from an onshore source or from another vessel. In an alternative embodiment, the storage units SU1, SU2 are exchangeable, so that a filled storage unit may be exchanged with an empty storage unit.

At the stern ST of the vessel, a first guide G1 and a second guide G2 for guiding the flexible article into the sea are shown. The first and second guides G1, G2 are in this embodiment chutes which are moveable in a horizontal direction transverse to a longitudinal axis LA of the vessel VE. To show this movability of the first and second guides G1, G2, the first and second guides G1, G2 are depicted in Fig. 2 in their two extremes at the same time. Hence, although it seems at first glance that the vessel comprises four guides when looking at Fig. 2, it actually are two guides shown in two distinct positions on the upper deck UD.

The vessel VE further comprises an article support system for supporting the article and an overboarding quadrant QA.

The article support system includes a first support section SS1 extending between the first guide G1 and the overboarding quadrant, a second support section SS2 extending between the second guide G2 and the overboarding quadrant QA, a third support section SS3 extending between the first storage unit SU1 and the second support section SS2, and a fourth support section SS4 extending between the second storage unit SU2 and the first support section SS1. In Fig. 2, a first opening O1 and a second opening 02 are shown where the first and second storage units, respectively, are able to provide a flexible article to the third and fourth support section, respectively.

This allows a flexible article originating from the first storage unit SU1 to be lowered into the sea by travelling along a support path subsequently including the third support section SS3, the second support section SS2, the overboarding quadrant QA, the first support section SS1 and the first guide G1. It also allows a flexible article originating from the second storage unit SU2 to be lowered into the sea by travelling along a support path subsequently including the fourth support section SS4, the first support section SS1, the overboarding quadrant QA, the second support section SS2, and the second guide G2.

The first support section SS1 includes a diverter D1 to guide the flexible article from the first support section towards the first guide independent of the transverse position of the first guide G1.

The second support section SS2 includes a diverter D2 to guide the flexible article from the second support section towards the second guide independent of the transverse position of the second guide G2.

The combination of diverter D1 and the first guide G1, and the combination of diverter D2 and the second guide G2 are preferably configured such that the radius of curvature of the flexible article is always above a predetermined minimal value independent of the transverse position of the respective guide G1, G2.

The vessel VE comprises a first short-cut SC1 between the first opening O1 and the first support section allowing to bypass the third support section SS3, the second support section SS2 and the overboarding quadrant QA and provide a direct path from the first storage unit SU1 to the first guide G1 via the first support section SS1.

The vessel VE also comprises a second short-cut SC2 between the second opening 02 and the second support section allowing to bypass the fourth support section SS4, the first support section SS1 and the overboarding quadrant QA and provide a direct path from the second storage unit SU1 to the second guide G2 via the second support section SS2.

Provided in the first support section is a first tensioner T1 to engage with the flexible article in order to move the flexible article along the first support section SS1. The first tensioner T1 is provided on a first carriage C1 that is moveable in a longitudinal direction of the vessel VE to compensate for wave-induced motions of the vessel, e.g. heave motions.

Provided in the second support section is a second tensioner T2 to engage with the flexible article in order to move the flexible article along the second support section SS2. The second tensioner T2 is provided on a second carriage C2 that is moveable in a longitudinal direction of the vessel VE to compensate for wave-induced motions of the vessel, e.g. heave motions.

The first, second, third and fourth support sections are arranged mainly parallel to each other and such that the second support section is arranged in between the fourth support section and the first support section, and the first support section is arranged in between third support section and the second support section, thereby obtaining a more or less symmetrical layout for use with both the first and second storage units.

The overboarding quadrant QA is moveable in longitudinal direction of the vessel along the first and second support sections and is configured to support and guide the flexible article between the first and second support sections. The overboarding quadrant is moveable between the two opposite ends of the first and second support sections as depicted in Fig. 2, where the quadrant is shown in two distinct locations. The tensioners T1 and T2 are configured to disengage from the flexible article and/or move away from the first and second support sections to allow the passage of the overboarding quadrant is necessary.

The overboarding quadrant can be used to provide a buffer with flexible article on the vessel, but is mainly used for lowering the flexible article into the sea and/or to provide heave compensation to the flexible article.

The overboarding quadrant is connected to a winch WI via a pulling cable PC to allow the overboarding quadrant to be moved.

When the overboarding quadrant is in the shown position at the first and second guide side of the first and second support sections, the overboarding quadrant is positioned over a frame FR of a quadrant handling system, which is best shown in Fig. 1. The frame FR can be moved between a substantially horizontal orientation and a substantially vertical orientation by rotating about a rotation axis RA to move the quadrant between a substantially horizontal orientation and a substantially vertical orientation to lower the quadrant into the sea. In Fig. 1, the overboarding quadrant and the frame are shown in three positions, a substantially horizontal orientation, a substantially vertical orientation and an inclined orientation in dashed lines which may be used after the overboarding quadrant has left the frame FR to create more distance between overboarding quadrant and vessel.

It is to be noted that in Fig. 2, the flexible article FA is shown to extend from the first guide G1 to the second guide G2 via the overboarding quadrant QA, which may be the situation prior to lowering the overboarding quadrant and flexible article into the sea. The overboarding quadrant is then first moved from the position near the winch WI to the position near the diverters D1, D2, preferably while heave compensating the overboarding quadrant using the winch WI and pulling cable PC. Subsequently, the overboarding quadrant is rotated to the substantially vertical orientation. The pulling cable PC is then preferably arranged over a sheave SH arranged at the free end of the frame FR so that the winch WI and the pulling cable PC are able to keep positioning the quadrant on the frame during rotation of the frame, and preferably while heave compensating the quadrant on the frame.

The quadrant can then be lowered into the sea by paying out the pulling cable PC, preferably also while heave compensating the quadrant.

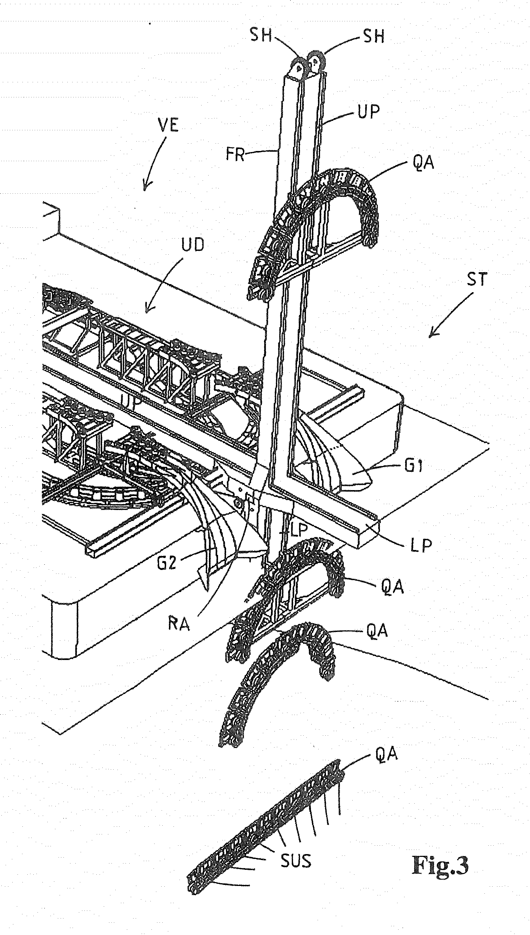

Fig. 3 depicts the stern of a vessel VE according to an embodiment different but similar to the embodiment of Figs. 1 and 2.

One difference is that the frame FR of the quadrant handling system, which is shown in two orientations in Fig. 3, has both an upper portion UP extending above the rotation axis RA and a lower portion LP extending below the rotation axis RA seen in the vertical orientation of the frame FR, which lower portion extends into the water in the vertical orientation to guide the quadrant beyond the splash zone into the water, preferably while heave compensating the quadrant QA.

The quadrant in Fig. 3 has a support with a plurality of support segments SUS that are moveable relative to each other, so that the guide path as provided by the support can be arcuate in a lowering configuration as shown in Fig. 1, 2 and in Fig. 3 for the three upper positions of the quadrant, and so that the guide path can be straight as shown in the lower position of the quadrant in Fig. 3 when the quadrant is near the sea bottom.

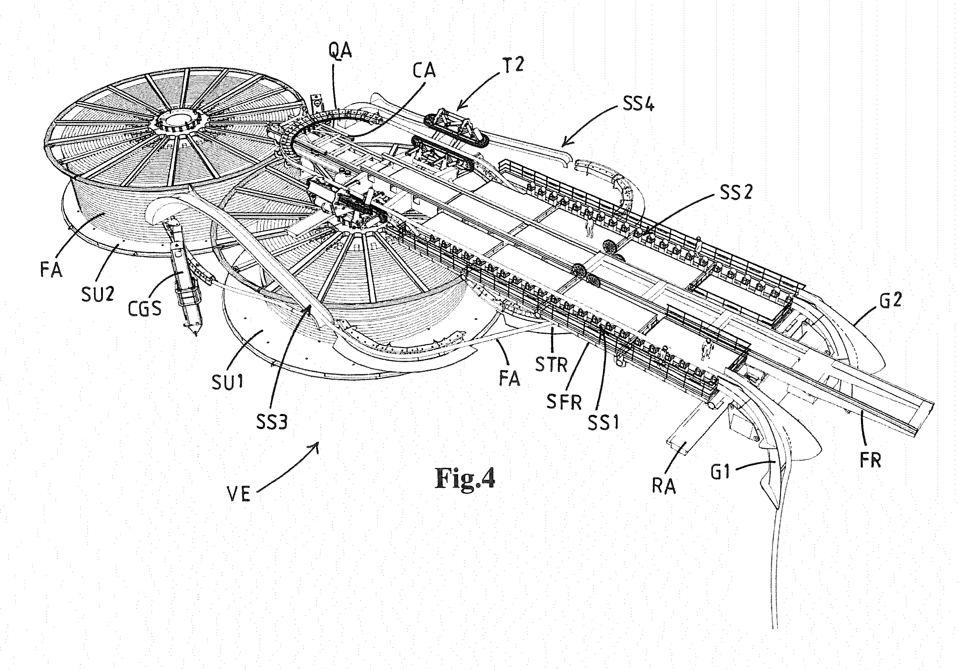

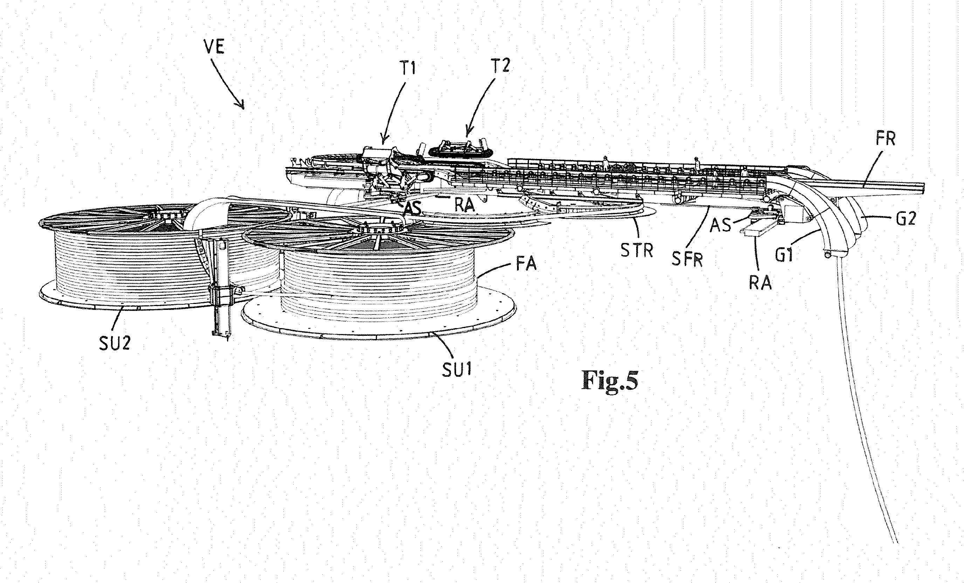

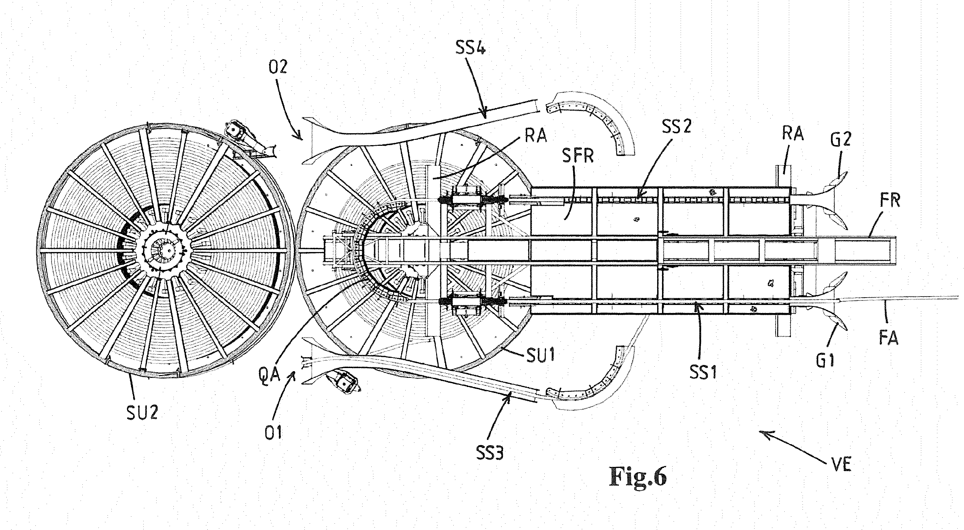

Figs. 4-8 depict a vessel VE according to another embodiment of the invention, where Fig. 4 depicts a perspective top view, Fig. 5 depicts a perspective side view and Figs. 6-8 depict top views of the vessel VE.

The vessel VE may be of the type as shown in Figs. 1-3, but the hull and decks of the vessel are omitted for clarity reasons. Shown in the Figs. 4-8 are a first storage unit SU1, a second storage unit SU2, a first guide G1, a second guide G2, an overboarding quadrant QA, and an article support system for supporting a flexible article FA, in this case a cable FA, between the first and second storage units SU1, SU2 on the one hand and the first and second guides G1, G2 on the other hand allowing the vessel VE to lower the flexible article, i.e. cable FA, into a sea.

The article support system includes a first support section SS1 extending between the first guide G1 and the overboarding quadrant QA, a second support section SS2 extending between the second guide G2 and the overboarding quadrant QA, a third support section SS3 extending between the first storage unit SU1 and the second support section SS2, and a fourth support section SS4 extending between the second storage unit SU2 and the first support section SS1. The overboarding quadrant QA is configured to support and guide the cable FA between the first and second support sections SS1, SS2.

In this embodiment, the first and second storage units SU1, SU2 are arranged below an upper deck similar to the embodiment of Figs. 1-3. A cable guide system CGS is provided per storage unit SU1, SU2 to guide the cable FA through a respective opening 01, 02 in the upper deck (only schematically indicated in Fig. 6) to above the upper deck to be received by the third and fourth support sections SS3, SS4, respectively.

The first guide G1, the second guide G2, the first support section SS1, the second support section SS2, and the overboarding quadrant QA are arranged on a frame SFR that is moveable relative to the upper deck of the vessel in a substantially horizontal plane as will be explained in more detail below by reference to the Figs. 6-8, in which the substantially horizontal plane extends in the plane of the drawings.

To move the frame SFR, rails RA are provided on the upper deck, which rails RA extend in a direction transverse to a longitudinal axis of the frame SFR, i.e. transverse to a longitudinal axis of the vessel VE, and an actuation system AS is provided to move the frame SFR in a direction parallel to the rails RA and to move the frame SFR in a direction perpendicular thereto, i.e. parallel to the longitudinal axis of the frame SFR or vessel VE. In this embodiment, this may result in the combination of frame SFR and actuation system being moveable in the direction parallel to the rails RA relative to the rails RA and the frame SFR being moveable relative to the actuation system in the direction perpendicular thereto. It is therefore also possible that the frame SFR is provided with rails at its underside to engage with the actuation system AS.

Arranged on the frame SFR is a support structure STR configured to support and guide the cable FA as part of the third support section SS3. In the shown Figures 1-8, the cable FA is guided along a support path starting at the first storage unit SU1 and subsequently including the corresponding cable guide system CGS, the third support section SS3 including the support structure STR, the second support structure SS2, the overboarding quadrant QA, the first support section SS1 and the first guide G1. The cable FA enters the sea from the first guide G1.

Although not shown, a cable FA held by the second storage unit SU2 can be guided into the sea along a support path starting at the second storage unit SU2 and subsequently including the corresponding cable guide system CGS, the fourth support section SS4 including the support structure STR, the first support structure SS1, the overboarding quadrant QA, the second support section SS2 and the second guide G2. Hence, the support structure STR can be part of both the third and fourth support sections SS3, SS4.

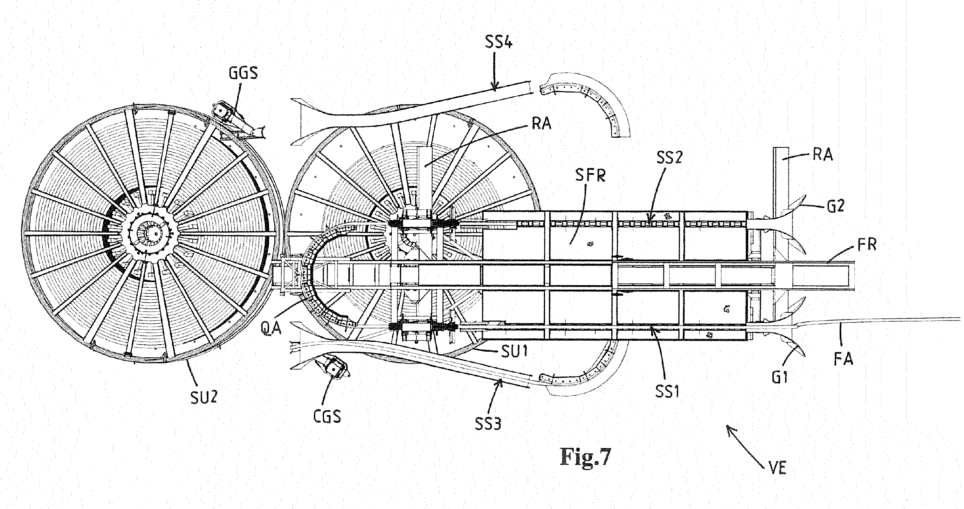

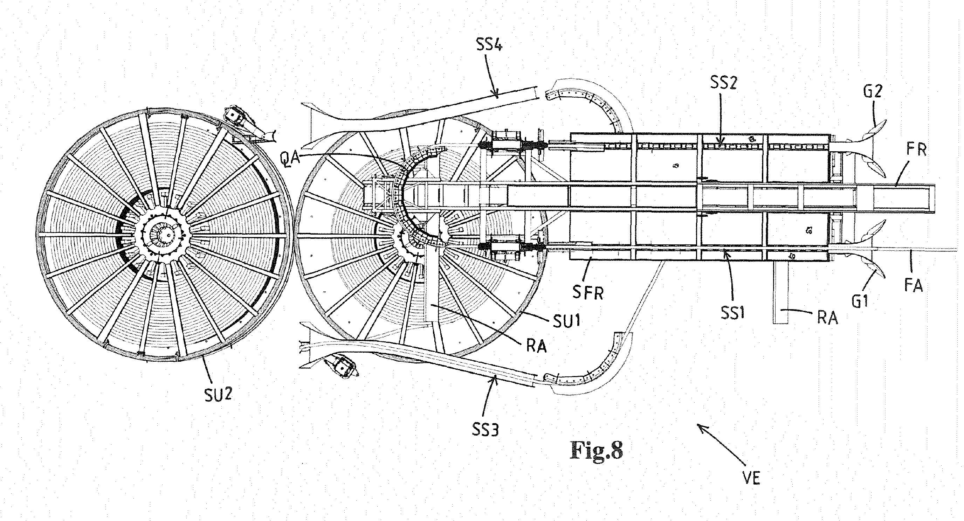

Fig. 6 depicts the frame SFR in a central position within the substantially horizontal plane. To indicate the movability of the frame SFR, reference is made to Figs. 7 and 8. In Fig. 7, the frame SFR has moved to the left, i.e. to the bow of the vessel VE, and to the bottom, i.e. to the port side of the vessel VE, of the drawing, thereby indicating one corner of the substantially horizontal plane. In Fig. 8, the frame SFR has moved to the right, i.e. to the stern of the vessel VE, and to the top, i.e. the starboard side of the vessel VE, of the drawing, thereby indicating an opposite corner fo the substantially horizontal plane. The frame SFR can thus take any position within this rectangular horizontal plane indicated by the two corner positions of Fig. 7 and 8 to compensate for wave-induced motions of the vessel VE.

The overboarding quadrant of the vessel VE of Figs. 4-8 can be used to apply heave compensation according to the invention.

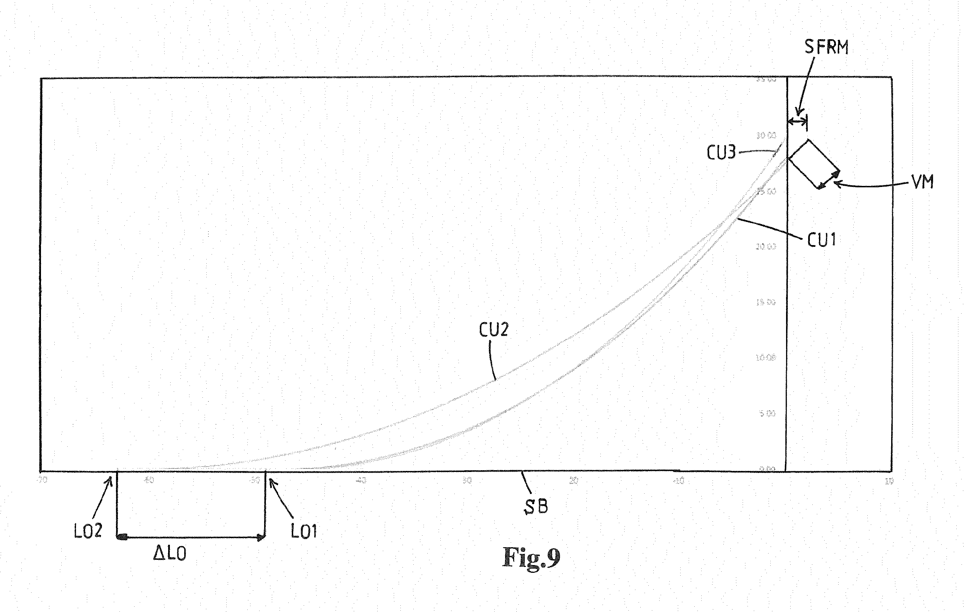

Fig. 9 depicts a shape of the cable between the vessel at the right side of the graph and the sea bottom SB at the left side of the graph for three situations. Curve CU1 is an initial cable shape, e.g. for the situation in which the frame SFR of the vessel VE is in the central position as depicted in Fig. 7. A characteristic of the curve CU1 is the location LO1 where the cable hits the sea bottom SB

As the result of a wave-induced vessel motion VM, in this case moving the vessel to the right and upwards relative to the initial situation, the cable shape changes to the curve CU2. This uncompensated situation also results in a new location LO2 where the cable makes contact with the sea bottom SB. This cable movement is undesired.

Although it is possible to fully compensate for the vessel motion VM, it is possible to only move the frame SFR without heave compensation in horizontal direction as indicated by arrow SFRM resulting in a cable shape as indicated by curve CU3, which is slightly different from curve CU1, but results in the same location LO1 where the cable engages with the sea bottom SB.

Movement of the frame SFR results in different cable lengths between the storage unit SU1 or SU2 and the frame SFR. To deal with these cable length differences, the support structure STR may be moveably arranged on the frame SFR, e.g. to move in a direction parallel to the longitudinal axis of the frame SFR allowing to compensate for cable length differences caused by movement of the frame SFR.

Alternatively, or additionally, the overboarding quadrant QA may be arranged on a carriage CA that is moveable between the position as shown in the Figs. 4-8 at a distance from the first and second support sections SS1, SS2, and a position closer to the first and second support sections SS1, SS2 allowing to compensate for cable length differences caused by movement of the frame SFR and/or to provide heave compensation at least partially.

Also shown in Figs. 4-8 are a first tensioner T1 as part of the first support section SS1 configured to control movement of the cable FA along the first support section SS1, and a second tensioner T2 as part of the second support section SS2 configured to control movement of the cable FA along the second support section SS2. In the Figs. 4-8, the tensioners T1 and T2 are shown in an open configuration allowing for instance to let the overboarding quadrant QA pass the tensioners.

The vessel VE is further provided with a quadrant handling system including a frame FR at the first and second guide side of the frame SFR. The frame FR can be moved between a substantially horizontal orientation to receive the overboarding quadrant QA and a substantially vertical orientation to lower the quadrant into the sea.

## Claims

1. A vessel (VE) for lowering a flexible article (FA) into the sea, said vessel comprising:
- a first guide (G1) for guiding the flexible article (FA) into the sea;
- a second guide (G2) for guiding the flexible article (FA) into the sea;
- an overboarding quadrant (QA); and
- an article support system for supporting the article (FA),
wherein the article support system includes a first support section (SS1) extending between the first guide (G1) and the overboarding quadrant (QA), and a second support section (SS2) extending between the second guide (G2) and the overboarding quadrant (QA), said overboarding quadrant (QA) being configured to support and guide the article (FA) between the first support section (SS1) and the second support section (SS2),
wherein the overboarding quadrant (QA) is moveable along the first and second support sections (SS1,SS2) between the first and second guide ends of the first and second support section (SS1,SS2) and the opposite ends of the first and second support sections (SS1,SS2), wherein the vessel further comprises a quadrant handling system at the first and second guide side of the vessel (VE), which quadrant handling system is configured to move the overboarding quadrant (QA) between a substantially horizontal orientation at the first and second support sections (SS1,SS2) and a substantially vertical orientation to lower the overboarding quadrant (QA) into the sea,
**characterized in that**
the vessel (VE) further comprises a heave compensation system configured to operate on the overboarding quadrant (QA) to compensate for wave-induced heave motion of the vessel (VE) in any orientation of the quadrant handling system between the substantially horizontal orientation and the substantially vertical orientation.

2. A vessel (VE) according to claim 1, wherein the heave compensation system is further configured to operate on the overboarding quadrant (QA) to compensate for wave-induced heave motion of the vessel (VE) in any position of the overboarding quadrant (QA) along the first and second support sections (SS1,SS2).

3. A vessel (VE) according to claim 1 or claim 2, wherein the heave compensation system is further configured to operate on the overboarding quadrant (QA) to compensate for wave-induced heave motion of the vessel during lowering of the overboarding quadrant towards the sea bottom.

4. A vessel (VE) according to any of the claims 1-3, wherein the vessel (VE) includes a pulling cable (PC) connected to the overboarding quadrant (QA) and a winch (WI) to haul in and pay out the pulling cable (PC).

5. A vessel (VE) according to claim 4, wherein the winch (WI) and pulling cable (PC) are part of the heave compensation and the winch (WI) is actively controllable to apply heave compensation on top of the normal position control of the overboarding quadrant (QA).

6. A vessel (VE) according to claim 4 of 5, wherein the winch (WI) is moveably arranged on the vessel (VE), e.g. on a moveable platform, wherein the winch is usable for normal position control of the overboarding quadrant (QA) and the heave compensation is configured to apply active and/or passive heave compensation a construction, e.g. the moveable platform, responsible for the winch (WI) being moveable relative to the vessel (VE).

7. A vessel (VE) according to any of the claims 4-6, wherein the winch (WI) and pulling cable (PC) may be a first winch and a first pulling cable, wherein the vessel (VE) comprises a second winch and a second pulling cable, wherein the second pulling cable is connected to the overboarding quadrant (QA) to apply pulling forces to the overboarding quadrant (QA) in an opposite direction than the first pulling cable (PC), thereby allowing to move the overboarding quadrant (QA) in both directions without being dependent on the tension in the flexible article (FA).

8. A vessel (VE) according to any of the claims 4-7, wherein the quadrant handling system includes a frame (FR) that is moveable between a substantially horizontal orientation such that the overboarding quadrant (QA) can be moved over the frame, and a substantially vertical orientation to lower the overboarding quadrant (QA) into the sea, wherein the frame (FA) at or near a free end of the frame (FR) includes a sheave (SH) to guide the pulling cable (PC) between the overboarding quadrant (QA) and the winch (WI) when the overboarding quadrant (QA) is supported by the frame (FR).

9. A vessel (VE) according to claim 8, wherein the heave compensation system is able to apply heave compensation to the overboarding quadrant (QA) by:
- applying active heave compensation to the pulling cable (PC) using the winch (WI);
- applying active and/or passive heave compensation to a support construction of the winch (WI); and/or
- applying active heave compensation to the frame (FR) supporting the overboarding quadrant (QA).

10. A vessel (VE) according to any of the preceding claims, wherein the quadrant handling system includes a frame (FR) that is moveable between a substantially horizontal orientation such that the overboarding quadrant (QA) can be moved over the frame (FR), and a substantially vertical orientation to lower the overboarding quadrant (QA) into the sea, wherein the frame (FR) includes a lowering winch and lowering cable to be connected to the overboarding quadrant (QA), such that heave compensation can be applied to the overboarding quadrant (QA) during the movement between horizontal and vertical orientation via the lowering winch and lowering cable.

11. A vessel (VE) according to any of the claims 8-10, wherein the frame (FR) includes a rotation axis (RA) at or near the stern (ST) of the vessel (VE) in between the first and second guide (G1,G2) and extends parallel to and in between the first and second support sections (SS1,SS2).

12. A vessel (VE) according to any of the claims 8-11, wherein the vessel (VE) comprises an orientation determination device to determine the orientation of the quadrant handling system and/or to determine the orientation of the overboarding quadrant (QA), wherein the winch (WI) is to be controlled based on an output of the orientation determination device when the overboarding quadrant (QA) is supported by the quadrant handling system.

13. A vessel (VE) according to any of the preceding claims, wherein the quadrant handling system, e.g. the frame (FR), is arranged in between the first and second guide (G1,G2), preferably at the stern (ST) of the vessel (VE).

14. A vessel (VE) according to any of the preceding claims, wherein the quadrant handling system and/or the overboarding quadrant (QA) include corresponding coupling means to temporarily couple the overboarding quadrant (QA) to the quadrant handling system such that the overboarding quadrant (QA) is moveable in a direction along the quadrant handling system for heave compensation purposes and for lowering the overboarding quadrant (QA) into the sea, and such that movement in at least one other direction is prevented.

15. A method for lowering a flexible article (FA) into the sea using a vessel (VE) comprising:
- a first guide (G1) for guiding the flexible article (FA) into the sea;
- a second guide (G2) for guiding the flexible article (FA) into the sea;
- an overboarding quadrant (QA);
- an article support system for supporting the article (FA); and
- a quadrant handling system at the first and second guide side of the vessel (VE),
wherein the article support system includes a first support section (SS1) extending between the first guide (G1) and the overboarding quadrant (QA), and a second support section (SS1) extending between the second guide (SS2) and the overboarding quadrant (QA), said overboarding quadrant (QA) being configured to support and guide the article (FA) between the first support section (SS1) and the second support section (SS2),
wherein the overboarding quadrant (QA) is moveable along the first and second support sections (SS1,SS2) between the first and second guide ends of the first and second support section (SS1,SS2) and the opposite ends of the first and second support sections (SS1,SS2), and wherein the method comprises the following steps:
a) supporting a flexible article (FA) extending between the first guide (G1) and the second guide (G2) via the overboarding quadrant (QA) by the first support section (SS1), the second support section (SS2), and the overboarding quadrant (QA);
b) moving the overboarding quadrant (QA) along the first and second support sections (SS1,SS2) towards the first and second guide (G1,G2);
c) moving the overboarding quadrant (QA) from a substantially horizontal orientation at the first and second support sections (SS1,SS2) towards a substantially vertical orientation using the quadrant handling system; and
d) lowering the overboarding quadrant (QA) into the sea,
**characterized in that** heave compensation of the overboarding quadrant (QA) is applied at least partially during steps c) and d), and preferably also during step b).

## Patentansprüche

1. Schiff (VE) zum Absenken eines flexiblen Gegenstands (FA) in die See, wobei das Schiff Folgendes umfasst:
- eine erste Führung (G1) zum Führen des flexiblen Gegenstands (FA) in die See;
- eine zweite Führung (G2) zum Führen des flexiblen Gegenstands (FA) in die See;
- einen Quadranten (QA) zum Entladen über Bord; und
- ein Gegenstandstragsystem zum Tragen des Gegenstands (FA),
wobei das Gegenstandstragsystem einen ersten Tragabschnitt (SS1), der sich zwischen der ersten Führung (G1) und dem Quadranten (QA) zum Entladen über Bord erstreckt, und einen zweiten Tragabschnitt (SS2), der sich zwischen der zweiten Führung (G2) und dem Quadranten (QA) zum Entladen über Bord erstreckt, enthält, wobei der Quadrant (QA) zum Entladen über Bord konfiguriert ist, den Gegenstand (FA) zwischen dem ersten Tragabschnitt (SS1) und dem zweiten Tragabschnitt (SS2) zu tragen und zu führen,
wobei der Quadrant (QA) zum Entladen über Bord entlang des ersten und des zweiten Tragabschnitts (SS1, SS2) zwischen dem ersten und dem zweiten Führungsende des ersten und des zweiten Tragabschnitts (SS1, SS2) und den gegenüberliegenden Enden des ersten und des zweiten Tragabschnitts (SS1, SS2) beweglich ist, wobei das Schiff ferner ein Quadrantenhandhabungssystem an der ersten und der zweiten Führungsseite des Schiffes (VE) umfasst, wobei das Quadrantenhandhabungssystem konfiguriert ist, den Quadranten (QA) zum Entladen über Bord zwischen einer im Wesentlichen horizontalen Ausrichtung an dem ersten und dem zweiten Tragabschnitt (SS1, SS2) und einer im Wesentlichen vertikalen Ausrichtung, um den Quadranten (QA) zum Entladen über Bord in die See abzusenken, zu bewegen,
**dadurch gekennzeichnet, dass**
das Schiff (VE) ferner ein Seegangskompensationssystem umfasst, das konfiguriert ist, auf den Quadranten (QA) zum Entladen über Bord einzuwirken, um eine welleninduzierte Seegangsbewegung des Schiffes (VE) in einer beliebigen Ausrichtung des Quandrantenhandhabungssystems zwischen der im Wesentlichen horizontalen Ausrichtung und der im Wesentlichen vertikalen Ausrichtung zu kompensieren.

2. Schiff (VE) nach Anspruch 1, wobei das Seegangskompensationssystem ferner konfiguriert ist, auf den Quadranten (QA) zum Entladen über Bord einzuwirken, um eine welleninduzierte Seegangsbewegung des Schiffes (VE) in einer beliebigen Position des Quadranten (QA) zum Entladen über Bord entlang des ersten und des zweiten Tragabschnitts (SS1, SS2) zu kompensieren.

3. Schiff (VE) nach Anspruch 1 oder Anspruch 2, wobei das Seegangskompensationssystem ferner konfiguriert ist, auf den Quadranten (QA) zum Entladen über Bord einzuwirken, um eine welleninduzierte Seegangsbewegung des Schiffes während des Absenkens des Quadranten (QA) zum Entladen über Bord in Richtung des Seebodens zu kompensieren.

4. Schiff (VE) nach einem der Ansprüche 1-3, wobei das Schiff (VE) ein Zugseil (PC), das mit dem Quadranten (QA) zum Entladen über Bord verbunden ist, und eine Seilwinde (WI), um das Zugseil (PC) einzuholen und auszugeben, enthält.

5. Schiff (VE) nach Anspruch 4, wobei die Seilwinde (WI) und das Zugseil (PC) Teil des Seegangsbewegungsausgleichs sind und die Seilwinde (WI) aktiv steuerbar ist, um einen Seegangsbewegungsausgleich zusätzlich zu der normalen Positionssteuerung des Quadranten (QA) zum Entladen über Bord auszuüben.

6. Schiff (VE) nach Anspruch 4 von 5, wobei die Seilwinde (WI) auf dem Schiff (VE) beweglich, z. B. auf einer beweglichen Plattform, angeordnet ist, wobei die Seilwinde für eine normale Positionssteuerung des Quadranten (QA) zum Entladen über Bord verwendbar ist und der Seegangsbewegungsausgleich konfiguriert ist, einen aktiven und/oder passiven Seegangsbewegungsausgleich auf eine Konstruktion, z. B. die bewegliche Plattform, die dafür verantwortlich ist, dass die Seilwinde (WI) in Bezug auf das Schiff (VE) beweglich ist, auszuüben.

7. Schiff (VE) nach einem der Ansprüche 4-6, wobei die Seilwinde (WI) und das Zugseil (PC) eine erste Seilwinde und ein erstes Zugseil sein können, wobei das Schiff (VE) eine zweite Seilwinde und ein zweites Zugseil umfasst, wobei das zweite Zugseil mit dem Quadranten (QA) zum Entladen über Bord verbunden ist, um Zugkräfte auf den Quadranten (QA) zum Entladen über Bord in einer zu dem ersten Zugseil (PC) entgegengesetzten Richtung auszuüben, wodurch erlaubt wird, dass sich der Quadrant (QA) zum Entladen über Bord in beide Richtungen bewegt, ohne von der Spannung in dem flexiblen Gegenstand (FA) abhängig zu sein.

8. Schiff (VE) nach einem der Ansprüche 4-7, wobei das Quadrantenhandhabungssystem einen Rahmen (FR) enthält, der zwischen einer im Wesentlichen horizontalen Ausrichtung, so dass der Quadrant (QA) zum Entladen über Bord über den Rahmen bewegt werden kann, und einer im Wesentlichen vertikalen Ausrichtung, um den Quadranten (QA) zum Entladen über Bord in die See abzusenken, beweglich ist, wobei der Rahmen (FA) an einem freien Ende des Rahmens (FR) oder in dessen Nähe eine Seilrolle (SH) enthält, um das Zugseil (PC) zwischen dem Quadranten (QA) zum Entladen über Bord und der Seilwinde (WI) zu führen, wenn der Quadrant (QA) zum Entladen über Bord durch den Rahmen (FR) getragen wird.

9. Schiff (VE) nach Anspruch 8, wobei das Seegangskompensationssystem einen Seegangsbewegungsausgleich auf den Quadranten (QA) zum Entladen über Bord ausüben kann durch:
- Ausüben eines aktiven Seegangsbewegungsausgleichs auf das Zugseil (PC) unter Verwendung der Seilwinde (WI);
- Ausüben eines aktiven und/oder passiven Seegangsbewegungsausgleichs auf eine Tragkonstruktion der Weilwinde (WI); und/oder
- Ausüben eines aktiven Seegangsbewegungsausgleichs auf den Rahmen (FR), der den Quadranten (QA) zum Entladen über Bord trägt.

10. Schiff (VE) nach einem der vorhergehenden Ansprüche, wobei das Quadrantenhandhabungssystem einen Rahmen (FR) enthält, der zwischen einer im Wesentlichen horizontalen Ausrichtung, so dass der Quadrant (QA) zum Entladen über Bord über den Rahmen (FR) bewegt werden kann, und einer im Wesentlichen vertikalen Ausrichtung, um den Quadranten (QA) zum Entladen über Bord in die See abzusenken, beweglich ist, wobei der Rahmen (FR) eine Absenkseilwinde und ein Absenkseil, die mit dem Quadranten (QA) zum Entladen über Bord zu verbinden sind, enthält, so dass der Seegangsbewegungsausgleich auf den Quadranten (QA) zum Entladen über Bord während der Bewegung zwischen einer horizontalen und einer vertikalen Ausrichtung über die Absenkseilwinde und das Absenkseil ausgeübt werden kann.

11. Schiff (VE) nach einem der Ansprüche 8-10, wobei der Rahmen (FR) eine Drehachse (RA) am Heck (ST) des Schiffes (VE) oder in dessen Nähe zwischen der ersten und der zweiten Führung (G1, G2) enthält und sich parallel dazu und zwischen dem ersten und dem zweiten Tragabschnitt (SS1, SS2) erstreckt.

12. Schiff (VE) nach einem der Ansprüche 8-11, wobei das Schiff (VE) eine Ausrichtungsbestimmungsvorrichtung umfasst, um die Ausrichtung des Quadrantenhandhabungssystems zu bestimmen und/oder die Ausrichtung des Quadranten (QA) zum Entladen über Bord zu bestimmen, wobei die Seilwinde (WI) anhand einer Ausgabe der Ausrichtungsbestimmungsvorrichtung zu steuern ist, wenn der Quadrant (QA) zum Entladen über Bord durch das Quadrantenhandhabungssystem getragen wird.

13. Schiff (VE) nach einem der vorhergehenden Ansprüche, wobei das Quadrantenhandhabungssystem, z. B. der Rahmen (FR), zwischen der ersten und der zweiten Führung (G1, G2), vorzugsweise am Heck (ST) des Schiffes (VE), angeordnet ist.

14. Schiff (VE) nach einem der vorhergehenden Ansprüche, wobei das Quadratenhandhabungssystem und/oder der Quadrant (QA) zum Entladen über Bord entsprechende Kopplungsmittel enthält, um den Quadranten (QA) zum Entladen über Bord vorläufig an das Quadrantenhandhabungssystem zu koppeln, so dass der Quadrant (QA) zum Entladen über Bord in eine Richtung entlang des Quadrantenhandhabungssystems für Seegangsbewegungsausgleichszwecke und zum Absenken des Quadranten (QA) zum Entladen über Bord in die See beweglich ist, und so dass die Bewegung in zumindest eine andere Richtung verhindert wird.

15. Verfahren zum Absenken eines flexiblen Gegenstands (FA) in die See unter Verwendung eines Schiffes (VE), das umfasst:
- eine erste Führung (G1) zum Führen des flexiblen Gegenstands (FA) in die See;
- eine zweite Führung (G2) zum Führen des flexiblen Gegenstands (FA) in die See;
- einen Quadranten (QA) zum Entladen über Bord; und
- ein Gegenstandstragsystem zum Tragen des Gegenstands (FA); und
- ein Quadrantenhandhabungssystem an der ersten und der zweiten Führungsseite des Schiffes (VE),
wobei das Gegenstandstragsystem einen ersten Tragabschnitt (SS1), der sich zwischen der ersten Führung (G1) und dem Quadranten (QA) zum Entladen über Bord erstreckt, und einen zweiten Tragabschnitt (SS1), der sich zwischen der zweiten Führung (SS2) und dem Quadranten (QA) zum Entladen über Bord erstreckt, enthält, wobei der Quadrant (QA) zum Entladen über Bord konfiguriert ist, den Gegenstand (FA) zwischen dem ersten Tragabschnitt (SS1) und dem zweiten Tragabschnitt (SS2) zu tragen und zu führen,
wobei der Quadrant (QA) zum Entladen über Bord entlang des ersten und des zweiten Tragabschnitts (SS1, SS2) zwischen dem ersten und dem zweiten Führungsende des ersten und des zweiten Tragabschnitts (SS1, SS2) und den gegenüberliegenden Enden des ersten und des zweiten Tragabschnitts (SS1, SS2) beweglich ist und wobei das Verfahren die folgenden Schritte umfasst:
a) Tragen eines flexiblen Gegenstands (FA), der sich zwischen der ersten Führung (G1) und der zweiten Führung (G2) erstreckt, über den Quadranten (QA) zum Entladen über Bord durch den ersten Tragabschnitt (SS1), den zweiten Tragabschnitt (SS2) und den Quadranten (QA) zum Entladen über Bord;
b) Bewegen des Quadranten (QA) zum Entladen über Bord entlang des ersten und des zweiten Tragabschnitts (SS1, SS2) in Richtung der ersten und der zweiten Führung (G1, G2);
c) Bewegen des Quadranten (QA) zum Entladen über Bord von einer im Wesentlichen horizontalen Ausrichtung an dem ersten und dem zweiten Tragabschnitt (SS1, SS2) in Richtung einer im Wesentlichen vertikalen Ausrichtung unter Verwendung des Quadrantenhandhabungssystems; und
d) Absenken des Quadranten (QA) zum Entladen über Bord in die See,
**dadurch gekennzeichnet, dass**
der Seegangsbewegungsausgleich des Quadranten (QA) zum Entladen über Bord zumindest teilweise während der Schritte c) und d) und vorzugsweise auch während des Schritts b) ausgeübt wird.

## Revendications

1. Navire (VE) pour abaisser un article souple (FA) dans la mer, ledit navire comprenant :
- un premier guide (G1) pour guider l'article souple (FA) dans la mer ;
- un second guide (G2) pour guider l'article souple (FA) dans la mer ;
- un quadrant de mise à l'eau (QA) ; et
- un système de support d'article pour supporter l'article (FA),
dans lequel le système de support d'article inclut une première section de support (SS1) s'étendant entre le premier guide (G1) et le quadrant de mise à l'eau (QA), et une seconde section de support (SS2) s'étendant entre le second guide (G2) et le quadrant de mise à l'eau (QA), ledit quadrant de mise à l'eau (QA) étant configuré pour supporter et guider l'article (FA) entre la première section de support (SS1) et la seconde section de support (SS2), dans lequel le quadrant de mise à l'eau (QA) est mobile le long des première et seconde sections de support (SS1, SS2) entre les première et seconde extrémités de guidage des première et seconde sections de support (SS1, SS2) et les extrémités opposées des première et seconde sections de support (SS1, SS2),
dans lequel le navire comprend en outre un système de manipulation de quadrant au niveau des premier et second côtés de guidage du navire (VE), ledit système de manipulation de quadrant étant configuré pour déplacer le quadrant de mise à l'eau (QA) entre une orientation sensiblement horizontale au niveau des première et seconde sections de support (SS1, SS2) et une orientation sensiblement verticale pour abaisser le quadrant de mise à l'eau (QA) dans la mer,
**caractérisé en ce que**
le navire (VE) comprend en outre un système de compensation de pilonnement configuré pour fonctionner sur le quadrant de mise à l'eau (QA) pour compenser le mouvement de pilonnement induit par les vagues du navire (VE) dans n'importe quelle orientation du système de manipulation de quadrant entre l'orientation sensiblement horizontale et l'orientation sensiblement verticale.

2. Navire (VE) selon la revendication 1, dans lequel le système de compensation de pilonnement est en outre configuré pour fonctionner sur le quadrant de mise à l'eau (QA) pour compenser le mouvement de pilonnement induit par les vagues du navire (VE) dans n'importe quelle position du quadrant de mise à l'eau (QA) le long des première et seconde sections de support (SS1, SS2).

3. Navire (VE) selon la revendication 1 ou la revendication 2, dans lequel le système de compensation de pilonnement est en outre configuré pour fonctionner sur le quadrant de mise à l'eau (QA) pour compenser le mouvement de pilonnement induit par les vagues du navire pendant l'abaissement du quadrant de mise à l'eau vers le fond de la mer.

4. Navire (VE) selon l'une quelconque des revendications 1 à 3, dans lequel le navire (VE) inclut un câble de tirage (PC) relié au quadrant de mise à l'eau (QA) et un treuil (WI) pour tirer et filer le câble de tirage (PC).

5. Navire (VE) selon la revendication 4, dans lequel le treuil (WI) et le câble de tirage (PC) font partie de la compensation de pilonnage et le treuil (WI) peut être commandé activement pour appliquer une compensation de pilonnage par-dessus la commande de position normale du quadrant de mise à l'eau (QA).

6. Navire (VE) selon la revendication 4 ou 5, dans lequel le treuil (WI) est agencé de manière mobile sur le navire (VE), par exemple sur une plateforme mobile, dans lequel le treuil est utilisable pour une commande de position normale du quadrant de mise à l'eau (QA) et la compensation de pilonnage est configurée pour appliquer une compensation de pilonnage active et/ou passive une construction, par exemple à la plateforme mobile, responsable de la mobilité du treuil (WI) par rapport au navire (VE).

7. Navire (VE) selon l'une quelconque des revendications 4 à 6, dans lequel le treuil (WI) et le câble de tirage (PC) peuvent être un premier treuil et un premier câble de tirage, dans lequel le navire (VE) comprend un second treuil et un second câble de tirage, dans lequel le second câble de tirage est relié au quadrant de mise à l'eau (QA) pour appliquer des forces de tirage au quadrant de mise à l'eau (QA) dans une direction opposée à celle du premier câble de tirage (PC), permettant ainsi de déplacer le quadrant de mise à l'eau (QA) dans les deux directions sans dépendre de la tension dans l'article souple (FA).

8. Navire (VE) selon l'une quelconque des revendications 4 à 7, dans lequel le système de manipulation de quadrant inclut un châssis (FR) qui est mobile entre une orientation sensiblement horizontale de telle sorte que le quadrant de mise à l'eau (QA) peut être déplacé sur le châssis, et une orientation sensiblement verticale pour abaisser le quadrant de mise à l'eau (QA) dans la mer, dans lequel le châssis (FA) au niveau ou à proximité d'une extrémité libre du châssis (FR) inclut une poulie (SH) pour guider le câble de tirage (PC) entre le quadrant de mise à l'eau (QA) et le treuil (WI) lorsque le quadrant de mise à l'eau (QA) est supporté par le châssis (FR).

9. Navire (VE) selon la revendication 8, dans lequel le système de compensation de pilonnement est apte à appliquer une compensation de pilonnement au quadrant de mise à l'eau (QA) en :
- appliquant une compensation de pilonnement active au câble de tirage (PC) à l'aide du treuil (WI) ;
- appliquant une compensation de pilonnement active et/ou passive à une construction de support du treuil (WI) ; et/ou
- appliquant une compensation de pilonnement active au châssis (FR) supportant le quadrant de mise à l'eau (QA).

10. Navire (VE) selon l'une quelconque des revendications précédentes, dans lequel le système de manipulation de quadrant inclut un châssis (FR) qui est mobile entre une orientation sensiblement horizontale de telle sorte que le quadrant de mise à l'eau (QA) peut être déplacé sur le châssis (FR), et une orientation sensiblement verticale pour abaisser le quadrant de mise à l'eau (QA) dans la mer, dans lequel le châssis (FR) inclut un treuil d'abaissement et un câble d'abaissement destinés à être reliés au quadrant de mise à l'eau (QA), de telle sorte qu'une compensation de pilonnement peut être appliquée au quadrant de mise à l'eau (QA) pendant le déplacement entre une orientation horizontale et verticale par l'intermédiaire du treuil d'abaissement et du câble d'abaissement.

11. Navire (VE) selon l'une quelconque des revendications 8 à 10, dans lequel le châssis (FR) inclut un axe de rotation (RA) au niveau ou à proximité de la poupe (ST) du navire (VE) entre les premier et second guides (G1, G2) et s'étend parallèlement à et entre les première et seconde sections de support (SS1, SS2).

12. Navire (VE) selon l'une quelconque des revendications 8 à 11, dans lequel le navire (VE) comprend un dispositif de détermination d'orientation pour déterminer l'orientation du système de manipulation de quadrant et/ou pour déterminer l'orientation du quadrant de mise à l'eau (QA), dans lequel le treuil (WI) est destiné à être commandé sur la base d'une sortie du dispositif de détermination d'orientation lorsque le quadrant de mise à l'eau (QA) est supporté par le système de manipulation de quadrant.

13. Navire (VE) selon l'une quelconque des revendications précédentes, dans lequel le système de manipulation de quadrant, par exemple le châssis (FR), est agencé entre les premier et second guides (G1, G2), de préférence au niveau de la poupe (ST) du navire (VE).

14. Navire (VE) selon l'une quelconque des revendications précédentes, dans lequel le système de manipulation de quadrant et/ou le quadrant de mise à l'eau (QA) incluent des moyens de couplage correspondants pour coupler temporairement le quadrant de mise à l'eau (QA) au système de manipulation de quadrant de telle sorte que le quadrant de mise à l'eau (QA) est mobile dans une direction le long du système de manipulation de quadrant à des fins de compensation de pilonnement et pour abaisser le quadrant de mise à l'eau (QA) dans la mer, et de telle sorte qu'un déplacement dans au moins une autre direction est empêché.

15. Procédé d'abaissement d'un article souple (FA) dans la mer à l'aide d'un navire (VE) comprenant :
- un premier guide (G1) pour guider l'article souple (FA) dans la mer ;
- un second guide (G2) pour guider l'article souple (FA) dans la mer ;
- un quadrant de mise à l'eau (QA) ;
- un système de support d'article pour supporter l'article (FA) ; et
- un système de manipulation de quadrant au niveau des premier et second côtés de guidage du navire (VE),
dans lequel le système de support d'article inclut une première section de support (SS1) s'étendant entre le premier guide (G1) et le quadrant de mise à l'eau (QA), et une seconde section de support (SS1) s'étendant entre le second guide (SS2) et le quadrant de mise à l'eau (QA), ledit quadrant de mise à l'eau (QA) étant configuré pour supporter et guider l'article (FA) entre la première section de support (SS1) et la seconde section de support (SS2), dans lequel le quadrant de mise à l'eau (QA) est mobile le long des première et seconde sections de support (SS1, SS2) entre les première et seconde extrémités de guidage des première et seconde sections de support (SS1, SS2) et les extrémités opposées des première et seconde sections de support (SS1, SS2), et dans lequel le procédé comprend les étapes suivantes :
a) le support d'un article souple (FA) s'étendant entre le premier guide (G1) et le second guide (G2) par l'intermédiaire du quadrant de mise à l'eau (QA) par la première section de support (SS1), la seconde section de support (SS2), et le quadrant de mise à l'eau (QA) ;
b) le déplacement du quadrant de mise à l'eau (QA) le long des première et seconde sections de support (SS1, SS2) vers les premier et second guides (G1, G2) ;
c) le déplacement du quadrant de mise à l'eau (QA) d'une orientation sensiblement horizontale au niveau des première et seconde sections de support (SS1, SS2) vers une orientation sensiblement verticale à l'aide du système de manipulation de quadrant ; et
d) l'abaissement du quadrant de mise à l'eau (QA) dans la mer,
**caractérisé en ce qu'**une compensation de pilonnement du quadrant de mise à l'eau (QA) est appliquée au moins partiellement pendant les étapes c) et d), et de préférence également pendant l'étape b).
